# EUROPEAN PATENT APPLICATION

(11) **EP 2 564 807 A1**
(43) Date of publication of application: **06.03.2013**
(21) Application number: 11774944.0
(22) Date of filing: 25.04.2011
(51) Int. Cl.: A61C 13/007, A61C 13/01

(54) **BLOCK FOR FABRICATING DENTURE BASE**

(30) Priority: 30.04.2010 JP 2010105458
(71) Applicant: GC Corporation, Bunkyo-ku Tokyo 113-0033 (JP); National University Corporation Tokyo Medical and Dental University, Bunkyo-ku Tokyo 113-8510 (JP)
(72) Inventor: MINAKUCHI, Shunsuke, Tokyo 113-8510 (JP); KANAZAWA, Manabu, Tokyo 113-8510 (JP); NAKAYAMA, Mizuki, Tokyo 174-8585 (JP); KUMAGAI, Tomohiro, Tokyo 174-8585 (JP)
(74) Representative: Müller-Boré & Partner Patentanwälte
(86) International application number: PCT/JP2011/060036
(87) International publication number: WO 2011/136163

(57) **Abstract**

To provide a most suitable block body for producing a denture base used when producing a denture base by cutting, the block body for producing a denture base is produced by polymerizing a (meth)acrylate monomer so as to have a color tone within a range that L* is 40 to 55, a* is 14 to 31, and b* is 5 to 20 when the color tone is measured with a sample thickness of 4mm based on JIS Z8729, and to be preferably in a cylindrical shape having a diameter of 8 to 15cm and a height of 1.5 to 5cm, or in an elliptical-cylindrical shape having a major diameter and minor diameter of 8 to 15cm and a height of 1.5 to 5cm.

## Description

The present invention relates to a block body for producing a denture base used when producing the denture base by a cutting machine based on three-dimensional coordinate data.

Conventionally, a method of casting a metal material by a lost wax casting method has been generally used for producing a dental prosthesis e.g., a crown, an inlay, a bridge, and the like. In the ordinary production of the dental prosthesis by the lost wax casting method, an objective dental prostheses, such as an inlay, a crown or the like, is produced by making a shape of a prosthesis on a gypsum model by using wax so as to obtain a wax pattern, burying the obtained wax pattern in a fireproof burying material, curing the buried material, putting the cured material into an electric furnace, heating the material so as to burn the wax pattern and obtain a mold, casting a metal or the like in the mold, cooling the cast material, taking a cast product out from the burying material, and cutting and polishing the taken-out product. In this method, the gypsum model is produced by taking an impression of the inside of an oral cavity to obtain an impression model, injecting gypsum into the impression model, and curing the gypsum.

As for such the dental prosthesis, a state of an objective tooth (a state of dental caries or a state of damaging or breaking) and an intraoral shape are different for each patient, so that the dental prosthesis to be produced is also different for each patient. Thus, the shape of the dental prosthesis is designed and produced based on the intuition and experience of a dental technician, considering the relationship with an opposite tooth or an adjacent tooth, an occlusal relationship, or the like. Furthermore, although an operation for producing the above-described dental prosthesis is complicated and needs a lot of steps by manual labor, the completed dental prosthesis is required to have extremely high size accuracy in units of several µm. Thus, in addition to the skill of the dental technician, much time and effort are necessary.

Therefore, as a method for stably providing a lot of dental prosthesis with a fixed quality in a short time, use of a CAD/CAM system has been noted in recent years. The CAD/CAM system is for designing a dental prosthesis such as an inlay, a crown, a bridge, or the like, on a screen by using a computer and producing the dental prosthesis by cutting and polishing. A dental prosthesis has been produced by a system for designing and producing a dental prosthesis by the CAD/CAM system. The CAD/CAM system is a method for producing an objective dental prosthesis by reading a shape of a tooth with formation of abutment or a cavity and reading a shape of an adjacent tooth or an opposite tooth in some cases, designing the objective dental prosthesis by using a computer based on the read shape of the tooth, setting a block-shaped material made of a resin cured body, a ceramic sintered body, a metal body, or the like, onto a cutting and polishing machine, and cutting and polishing the block-shaped material(e.g., refer to the patent documents Japanese Patent Application Laid-Open No. 2002-224143, Japanese Patent Application Laid-Open No. 2005-168825 and Japanese Patent Application Laid-Open No. 2007-215763).

However, when a denture base is produced by the conventional method for producing a dental prosthesis by using the CAD/CAM system, the conventionally used material to be cut, i.e., the resin cured body, the ceramic sintered body, the metal body, or the like, cannot be used for the denture base because of having a similar color tone to a tooth. Furthermore, there is a problem that the size of the material to be cut is not appropriate for producing the denture base (e.g., refer to Japanese Patent Application Laid-Open No. 2001-019539, : Japanese Patent Application Laid-Open No. 2004-035332 and Japanese Patent Application Laid-Open No. 2006-087527).

Accordingly, an objective of the present invention is to provide a most suitable block body for producing a denture base used when producing the denture base by cutting.

Present inventors carried out earnest works to solve the aforementioned problems and, as a result, they found out that the following block body for producing a denture base can solve the aforementioned problems to complete the present invention. The block body for producing a denture base is produced by polymerizing a (meth) acrylate monomer and has a color tone within a range that L* is 40 to 55, a* is 14 to 31, and b* is 5 to 20 when the color tone is measured with a sample thickness of 4mm based on JIS Z8729.

According to an aspect of the present invention, when a color tone of the block body for producing a denture base after being cured is measured with a sample thickness of 4mm based on JIS Z8729, the color tone is within a range that L* is 40 to 55, a* is 14 to 31, and b* is 5 to 20. If each value of L*, a*, and b* is outside of the range, such the color tone cannot be used for the denture base. Preferably, the color tone is within a range that L* is 42 to 48, a* is 20 to 30, and b* is 5 to 20.

It is preferable that the block body for producing a denture base according to the present invention is a block having a size fully larger than the size of a general full denture base. More particularly, it is preferable that the block body has a cylindrical shape having a diameter of 8 to 15cm and a height of 1.5 to 5cm, or has an elliptical-cylindrical shape having a major diameter and minor diameter of 8 to 15cm and a height of 1.5 to 5cm. The block body can be a cuboid having sides of 8 to 15cm and a height of 1.5 to 5cm.

It is preferable that the block body for producing a denture base has a holding part, e.g., a flange-shaped or rod-shaped projection, a screw hole, or the like. The holding part is previously provided on an outer periphery thereof so that the block body can be mounted on the cutting machine easily and accurately.

The block body for producing a denture base according to the present invention is produced by polymerizing a (meth) acrylate monomer. As the (meth) acrylate monomer, methyl(meth)acrylate can be used mainly. However, for securing fluidity and physical properties after curing when the monomer is mixed with a polymer component described below, other (meth)acrylate monomers can be mixed and used. As the other (meth)acrylate monomers, ethyl (meth)acrylate, butyl (meth)acrylate, isobutyl (meth)acrylate, 2-ethylhexyl(meth)acrylate, cyclohexyl (meth)acrylate, tetrahydrofurfuryl (meth)acrylate, or the like can be used. These monomers are used singly or by mixing two or more kinds.

Further, as a cross-linking agent, polyfunctional (meth)acrylate or diallyl phthalate can be used. Or a mixture obtained by adding diallyl phthalate to polyfunctional (meth)acrylate can be also used. As the polyfunctional (meth)acrylate, ethylene glycol di(meth)acrylate, 1, 3-butanediol di(meth)acrylate, 1, 4-butanediol di(meth)acrylate, trimethylolpropane tri(meth)acrylate, polyfunctional (meth)acrylate containing a urethane bond, or the like, can be properly used. These polyfunctional (meth) acrylates can be used singly or by mixing two or more kinds. The amount of addition of the cross-linking agent is preferably 0.001 to 15 weight parts with respect to 100 weight parts of a (meth)acrylate monomer. If the amount of addition is less than 0.001 weight parts, the cross-linking density of polymer chains is insufficient and the structure is not dense, so that solvent resistant is poor. In addition, since the cross-linking density is insufficient and the structure is not dense, the block body is deformed easily. If the amount of addition exceeds 15 weight parts, polymerization shrinkage tends to increase, and a cured body tends to be weak and broken easily.

The block body for producing a denture base according to the present invention can be mixed with a polymer component in addition to the monomer component described above. As the polymer component, a homopolymer of methyl (meth)acrylate or a copolymer mainly including methyl (meth)acrylate can be mainly used. As the copolymer mainly including methyl (meth)acrylate, a methyl (meth)acrylate/ethyl (meth)acrylate copolymer, a methyl (meth)acrylate/butyl (meth)acrylate copolymer, a methyl (meth)acrylate/ trimethylolpropane tri(meth)acrylate copolymer, a methyl (meth)acrylate/styrene copolymer, or the like can be used. The homopolymer of methyl (meth)acrylate and these copolymers mainly including methyl (meth)acrylate can be mixed to be used.

Further, one or more kinds of polymers other than the above-described polymer components can be mixed for adjusting physical properties of the block body for a denture base. As the polymer, a homopolymer of ethyl (meth)acrylate, a homopolymer of butyl (meth)acrylate, or the like, can be used.

As a polymerization catalyst for polymerizing the block body for producing a denture base according to the present invention, a thermal polymerization catalyst is used when a resin material for a denture base is heated, polymerized and cured. The polymerization catalyst is used properly within a range from 0.01 to 5 weight parts or less. If the amount of the polymerization catalyst exceeds 5 weight parts, an effect is hardly obtained. Further, since the resin material can be gently polymerized and cured only with a polymerization catalyst remaining in the polymer, the polymerization catalyst may not be added.

As the polymerization catalyst, diacyl peroxides having an aromatic group or peroxy esters being regarded as an ester of per-benzoic acid can be used. For example, benzoyl peroxide, 2, 4-dichlorobenzoyl peroxide, m-tolylperoxide, t-butylperoxybenzoate, di-t-butylperoxyisophthalate, 2,5-dimethyl-2,5-di(benzoylperoxy) hexane, 2,5-dimethyl-2,5-di[(o-benzoyl)benzoylperoxy] hexane, or the like, can be used. In addition, an azo compound such as azobisisobutyronitrile or the like, an organometallic compound such as tributylboron or the like, can be also used.

In addition, the block body for producing a denture base according to the present invention can be added with an inorganic filler to improve the strength of the cured body or the easiness of cutting, according to necessity. As the inorganic filler, particularly, powders of silicon dioxide, glasses such as barium glass, alumina glass, potassiumglass, and the like, synthetic zeolite, calcium phosphate, feldspar, aluminum silicate, calcium silicate, magnesium carbonate, quartz, or the like, can be used. These inorganic fillers can be surface-treated with a silane treating agent such as γ-methacryloxypropyltrimethoxysilane, vinyltrichlorosilane, vinyltriethoxysilane, vinyltrimethoxysilane, vinyltriacetoxysilane, vinyltri (methoxyethoxy) silane, or the like. Further, an organic/inorganic composite filler can be used as the filler, where the organic/inorganic composite filler is produced by previously mixing the inorganic filler with a (meth)acrylate monomer, curing the mixture, and pulverizing the cured body. In addition, polymer powder which is insoluble with a polymerizable monomer can be also used as the filler.

### <Evaluation of an appearance>

The produced block body for producing a denture base was cut to have the thickness of 4mm, and its appearance was visually observed.

### <Measuring of a color>

The produced block body for producing a denture base was cut to have the thickness of 4mm, and the color tone of the sample with the thickness of 4mm was measured based on JIS Z8729 by using a colorimeter (the product name: COLORIMETER SE-2000, produced by NIPPON DENSHOKU INDUSTRIES, CO., LTD.). These results were collectively shown in Table 1.

### <Example 1>

The following powder component and liquid component were prepared.

### Powder component

A powder component was produced by mixing 100 weight parts of a methylmethacrylate polymer, which were 1000g, and 0.0009 weight parts of a pigment in a mortar.

### Liquid component

A liquid component was produced by mixing 100 weight parts of methyl methacrylate, which were 1000g, and 0.005 weight parts of ethylene glycol dimethacrylate.

A sticky material was obtained by mixing the power component and the liquid component at a ratio of 220g:77g and leaving the mixture to stand for 80 minutes. The sticky material was taken into a metallic mold having an inner diameter of 10cm, and a convex metallic mold was pressed into the metallic mold at a pressure of 10t from the upper side by using a hydraulic press to keep the pressure. The lower surface of the metallic mold was heated to be at a temperature of 75°C, and kept at this temperature for 16 hours. After 16 hours elapsed, the pressure by the press was released, and the metallic mold was taken into water so as to be cooled. The block body was taken out from the cooled metallic mold, and a burr was removed. Accordingly, a cylindrical block body for producing a denture base having the diameter of 10cm and the height of 3cm was obtained. The produced block body for producing a denture base was cut to have the thickness of 4mm, and its appearance was visually observed. Then, it could be confirmed that the block body could be used aesthetic-sufficiently like a conventional denture base.

### <Example 2>

Example 2 was obtained by using the power component in which the blending amount of the pigment used in Example 1 was changed to be 0.0006 weight parts, heating the mixture in the metallic mold having a temperature of 40° at an upper part and a temperature of 90°C at a lower part, and keeping the mixture at these temperatures for 4 hours. The produced block body for producing a denture base was cut to have the thickness of 4mm, and its appearance was visually observed. Then, it could be confirmed that the block body could be used aesthetic-sufficiently like a conventional denture base.

### <Example 3>

A sticky material was obtained by using a commercial resin for a denture base (the product name: GC ACRON #3, produced by GC Corporation) as a conventional resin for a denture base, mixing the power component and the liquid component at a ratio of 200g:86g, and leaving the mixture to stand for 30 minutes. After being cooled in flowing water, the sticky material was filled in a gypsum model having an inner diameter of 10cm, put into boiling water for 1 hour, and polymerized. The sticky material was filled in a metallic mold having an inner diameter of 10cm, left to stand for 30 minutes, and polymerized. The block body was taken out from the metallic mold, and a burr was removed. Accordingly, a cylindrical block body for producing a denture base having the diameter of 9cm and the height of 2. 8cm was obtained. The produced block body for producing a denture base was cut to have the thickness of 4mm, and its appearance was visually observed. Then, it could be confirmed that the block body could be used aesthetic-sufficiently like a conventional denture base.

**<Table 1>**

| | Color Tone |
|---|---|
| Example 1 | L* = 46.75 |
| | a* = 28.94 |
| | b* = 17.31 |
| Example 2 | L* = 42.93 |
| | a* = 22.17 |
| | b* = 7.72 |
| Example 3 | L* = 47.04 |
| | a* = 28.80 |
| | b* = 16.91 |

## Claims

1. A block body for producing a denture base, wherein the block body is produced by polymerizing a (meth)acrylate monomer,
and has a color tone within a range that L* is 40 to 55, a* is 14 to 31, and b* is 5 to 20 when the color tone is measured with a sample thickness of 4mm based on JIS Z8729.

2. The block body for producing a denture base as claimed in claim 1, wherein the block body has a cylindrical shape having a diameter of 8 to 15cm and a height of 1.5 to 5cm.

3. The block body for producing a denture base as claimed in claim 1, wherein the block body has an elliptical-cylindrical shape having a major diameter and minor diameter of 8 to 15cm and a height of 1.5 to 5cm.

4. The block body for producing a denture base as claimed in claim 1, wherein the block body can be a cuboid having sides of 8 to 15cm and a height of 1.5 to 5cm.
